# EUROPÄISCHE PATENTANMELDUNG

(11) **EP 4 684 985 A1**
(43) Veröffentlichungstag der Anmeldung: **28.01.2026**
(21) Anmeldenummer: 25190690.5
(22) Anmeldetag: 21.07.2025
(51) Int. Cl.: B60C 27/06, B60C 27/20

(54) **LAUFNETZ, GLEITSCHUTZVORRICHTUNG UND LAUFNETZELEMENT MIT WENIGSTENS EINEM VON EINEM KUNSTSTOFFKÖRPER UMSPRITZTEN LAUFNETZELEMENT**

(30) Priorität: 23.07.2024 DE 102024120909
(71) Anmelder: RUD Ketten Rieger & Dietz GmbH u. Co. KG, 73432 Aalen (DE)
(72) Erfinder: ARRIGONI NERI, Marco, 73432 Aalen (DE)
(74) Vertreter: Grünecker Patent- und Rechtsanwälte PartG mbB

(57) **Zusammenfassung**

Gezeigt ist ein Laufnetz (10) für eine auf einem Fahrzeugrad (1) zu montierende Gleitschutzvorrichtung (2), mit Kettensträngen (14), die im auf dem Fahrzeugrad (1) montierten Zustand auf der Lauffläche (8) des Fahrzeugrades (1) aufliegen, und mit einem oder mehreren Laufnetzelementen (18), die im auf dem Fahrzeugrad (1) montierten Zustand ebenfalls auf der Lauffläche (8) des Fahrzeugrades (1) aufliegen und einen Kunststoffkörper (20) aufweisen, von dem wenigstens einer der Kettenstränge (14) umspritzt ist. Ein solches Laufnetz (10) ist kostengünstig auch bei großer Variantenvielfalt zu fertigen und bietet gute Traktions- und Verschleißeigenschaften. Ferner ist eine Gleitschutzvorrichtung (2) mit einem solchen Laufnetz (10) und ein Laufnetzelement (18) für ein solches Laufnetz (10) oder eine solche Gleitschutzvorrichtung (2) beschrieben, wobei das Laufnetzelement (18) wenigstens einen Kettenstrang (14) aufweist, der vom Kunststoffkörper (20) umspritzt ist.

## Beschreibung

Die Erfindung betrifft ein Laufnetz für eine auf einem Fahrzeugrad zu montierende Gleitschutzvorrichtung, eine Gleitschutzvorrichtung mit einem solchen Laufnetz sowie ein Laufnetzelement für ein solches Laufnetz oder eine solche Gleitschutzvorrichtung.

Gleitschutzvorrichtungen werden üblicherweise auf ein Fahrzeugrad aufgezogen, wenn die Traktion auf rutschigem Grund wie beispielsweise Schnee, Eis oder Schlamm, nicht mehr ausreicht. Das Laufnetz einer solchen Gleitschutzvorrichtung liegt auf der Lauffläche des Reifens des Fahrzeugrades auf und erhöht die Traktion. Bekannte Gleitschutzvorrichtungen sind beispielsweise Schnee- und Schlammketten.

Gleitschutzvorrichtungen können auf unterschiedliche Art am Fahrzeugrad montiert werden. So gibt es beispielsweise Gleitschutzvorrichtungen, die ausschließlich an der Außenseite des Fahrzeugrades befestigt werden, beispielsweise mithilfe der Radschrauben oder in einer zentralen Öffnung der Felge. Andere Gleitschutzvorrichtungen weisen eine Innenhalterung auf der der Karosserie zugewandten Innenseite des Fahrzeugrades und eine Außenhalterung auf der gegenüberliegenden Außenseite des Fahrzeugrades auf. Diese Gleitschutzvorrichtungen müssen nicht an der Felge befestigt werden.

Bei modernen Personenkraftwagen sind die Abstände zwischen dem Fahrzeugrad und dem Radkasten oft recht gering, so dass die Gleitschutzvorrichtung bei dennoch guter Traktion nicht zu hoch bauen darf, um nicht den Radkasten zu beschädigen. Gleichzeitig sollte die Gleitschutzvorrichtung eine hohe Lebensdauer aufweisen und kostengünstig zu fertigen sein.

Der Erfindung liegt in Anbetracht dessen die Aufgabe zugrunde, ein verbessertes Laufnetz zu schaffen, das diese Anforderungen erfüllt.

Gelöst wird diese Aufgabe durch ein Laufnetz für eine auf einem Fahrzeugrad zu montierende Gleitschutzvorrichtung, mit Kettensträngen, die im auf dem Fahrzeugrad montierten Zustand auf der Lauffläche des Fahrzeugrades aufliegen, und mit einem oder mehreren Laufnetzelementen, die im auf dem Fahrzeugrad montierten Zustand ebenfalls auf der Lauffläche des Fahrzeugrades aufliegen und einen Kunststoffkörper aufweisen, von dem wenigstens einer der Kettenstränge umspritzt ist.

Eine Gleitschutzvorrichtung, die die oben genannte Aufgabe löst, weist ein derartiges Laufnetz auf. Ferner wird die Aufgabe gelöst durch ein Laufnetzelement für ein solches Laufnetz oder Gleitschutzvorrichtung, wobei das Laufnetzelement einen Kunststoffkörper und einen Kettenstrang aufweist, wobei der Kettenstrang vom Kunststoffkörper umspritzt ist.

Durch die Umspritzung beziehungsweise, synonym, das Insert Molding des Kettenstranges lässt sich eine sehr stabile und dauerhafte Verbindung zwischen dem wenigstens einen Kettenstrang und dem Laufnetzelement bereits bei geringen Bauhöhen erreichen. Das Umspritzen des wenigstens einen Kettenstranges lässt sich einfach automatisieren, indem der wenigstens eine Kettenstrang beispielsweise einfach in eine Form eingelegt wird. Durch einen modularen Aufbau der verwendeten Formen lässt sich auf diese Weise sogar eine hohe Variantenvielfalt herstellen.

Die durch das Umspritzen erreichte innige Verbindung zwischen Kunststoffkörper und wenigstens einem Kettenstrang vereinfacht es, eine konstruktiv vorbestimmte Lage und/oder Ausrichtung des Laufnetzelements gegenüber dem wenigstens einen Kettenstrang einzuhalten.

Schließlich lassen sich durch das Umspritzen auf einfache Weise unterschiedlichste Materialien im Kunststoffkörper kombinieren oder gegeneinander austauschen. Dies erlaubt es, den Kunststoffkörper optimal an ihre jeweilige Funktion anzupassen.

Die oben genannte Lösung lässt sich durch die folgenden voneinander unabhängigen Merkmale, die jeweils für sich vorteilhaft und beliebig miteinander kombinierbar sind, weiter verbessern.

So kann gemäß einer Ausführungsform vorgesehen sein, dass wenigstens eines der mehreren Laufnetzelemente einen Kunststoffkörper aufweist, von dem wenigstens zwei der Kettenstränge beabstandet voneinander umspritzt sind. Bei dieser Ausführungsform kann die Lage und Ausrichtung der wenigstens zwei umspritzten Kettenstränge relativ zueinander durch den Kunststoffkörper festgelegt werden. Der Kunststoffkörper dient so als Abstandshalter.

Insbesondere kann der Kunststoffkörper die wenigstens zwei umspritzten Kettenstränge im auf dem Fahrzeugrad montierten Zustand quer zur Umfangsrichtung miteinander verbinden. Bei einer solchen Ausgestaltung dient der Kunststoffkörper als ein traktionserhöhendes Leiterelement, die sowohl traktionserhöhend wirken als auch die Lagestabilität des montierten Laufnetzes auf der Lauffläche erhöhen. Eine weitere Erhöhung der Lagestabilität kann erreicht werden, wenn in Umfangsrichtung beabstandet voneinander mehrere Laufnetzelemente mit Kunststoffkörpern vorhanden sind, die nebeneinander in Umfangsrichtung verlaufende Kettenstränge miteinander verbinden.

Die wenigstens zwei umspritzten Kettenstränge können sich dabei im auf dem Fahrzeugrad montierten Zustand wenigstens abschnittsweise in Umfangsrichtung erstrecken, also parallel oder geneigt zur Umfangsrichtung verlaufen. Die Kettenstränge des Laufnetzes müssen nicht parallel zueinander verlaufen, sie können auch schräg oder quer zueinander, aufeinander zu oder voneinander weg verlaufen. In einer Ausgestaltung kann das Laufnetz zwei parallel zueinander in Umfangsrichtung verlaufende Kettenstränge aufweisen, die in insbesondere regelmäßigen oder gleichen Abständen durch einen Kunststoffkörper eines Laufnetzelements miteinander verbunden sind. Die in Umfangsrichtung verlaufenden Kettenstränge verbessern den Geradeauslauf.

Die sich in Umfangsrichtung erstreckenden Kettenstränge erstrecken sich in einer Ausgestaltung durch mehrere in Umfangsrichtung hintereinander angeordnete Kunststoffkörper. Dabei kann wenigstens ein Kettenstrang, bevorzugt zwei Kettenstränge, in Umfangsrichtung endlos bzw. ununterbrochen sein. Dies bedeutet, dass in Umfangsrichtung sich die gleiche Folge von Kettengliedern stets ununterbrochen fortsetzt, ein Anfang oder ein Ende des Kettenstranges also nicht erkennbar ist.

Das Laufnetz kann ferner einen oder mehrere Kettenstränge aufweisen, die im montierten Zustand im wesentlichen in axialer Richtung verlaufen und zwei im wesentlichen in Umfangsrichtung verlaufende Kettenstränge miteinander verbinden. Die Stellen, an denen ein in axialer Richtung verlaufender Kettenstrang mit einem in Umfangsrichtung verlaufenden Kettenstrang miteinander verbunden ist, können von einem Kunststoffkörper, wie er hier beschrieben ist, umspritzt sein. Dabei kann der Bereich, in dem ein Kettenglied des in axialer Richtung verlaufenden Kettenstranges in ein Kettenglied des in Umfangsrichtung verlaufenden Kettenstranges eingehängt ist, bzw. ein diesen beiden Kettensträngen gemeinsames Kettenglied gegebenenfalls mit wenigstens einem Teil der an dieses Kettenglied angrenzenden Kettenglieder, in den Kunststoffkörper eingebettet.

Das Laufnetz kann in einer weiteren Ausgestaltung wenigstens einen Kettenstrang aufweisen, der sich im auf dem Fahrzeugrad montierten Zustand um eine Reifenschulter erstreckt. Ein solcher Kettenstrang kann auch zwei oder mehr im auf dem Fahrzeugrad montierten Zustand auf der Lauffläche aufliegende Kettenstränge insbesondere in axialer Richtung miteinander verbinden. Die Stelle, an der sich der um die Reifenschulter erstreckende Kettenstrang mit einem in Umfangsrichtung verlaufenden, auf der Lauffläche aufliegendem Kettenstrang verbunden ist, kann in Ausgestaltungen wie oben bei einem im wesentlichen axial verlaufenden Kettenstrang beschrieben umspritzt sein.

Die umspritzten Kettenstränge können Rundstahlkettenstränge, Profilstahlkettenstränge oder Panzerkettenstränge sein, wobei unterschiedliche Kettenformen in einem Laufnetz auch in den jeweils umspritzten Bereichen vorhanden sein können.

Die Kettenstränge können, insbesondere im vom Kunststoffkörper umspritzten Bereich, in Richtung des Kettenstrangs abwechselnd stehende oder liegende Kettenglieder aufweisen. Dies bedeutet, dass die von den Kettengliedern aufgespannten Ebenen beispielsweise bei Rundstahl- oder Profilstahlketten, im auf dem Fahrzeugrad montierten Zustand abwechselnd in etwa tangential bzw. parallel zur Lauffläche ("liegend") und senkrecht zur Lauffläche ("stehend") ausgerichtet sind. Alternativ oder kumulativ können die Kettenstränge zumindest im umspritzten Bereich mit im montierten Zustand schräg auf der Lauffläche aufliegenden Kettengliedern versehen sein, deren Ebenen abwechselnd um etwa +30° bis etwa +60° und um etwa -30° bis etwa -60° gegenüber der Lauffläche geneigt sind.

Gemäß einer weiteren vorteilhaften Ausgestaltung ist vorgesehen, dass im auf dem Fahrzeugrad montierten Zustand der wenigstens eine umspritzte Kettenstrang zumindest abschnittsweise aus dem Kunststoffkörper, insbesondere aus der der Lauffläche zugewandten und/oder aus der der Lauffläche abgewandten Seite des Kunststoffkörpers ragt. Der aus dem Kunststoffkörper ragende Abschnitt kann insbesondere freigelegt bzw. nicht von Kunststoff bedeckt sein. In einer solchen Ausgestaltung können bestimmte Materialeigenschaften des Kettenstranges, wie dessen Härte oder Verschleißfestigkeit, an der Oberfläche des Kunststoffkörpers mitgenutzt werden. Die aus dem Kunststoffkörper ragenden Teile des Kettenstranges schützen auf diese Weise den Kunststoffkörper. Insbesondere wenn der wenigstens eine aus dem Kunststoffkörper ragende Abschnitt den Kunststoffkörper überragt, rollt das Laufnetz auf den hervorragenden Abschnitten ab oder liegt auf den herausragenden Teilen auf der Lauffläche auf.

Der Kunststoffkörper kann aus wenigstens einem Plastikwerkstoff, wenigstens einem Gummiwerkstoff und/oder wenigstens gummielastischem Werkstoff gefertigt sein. Der Kunststoffkörper kann aus einem einzigen Kunststoff in einem Einkomponentenverfahren oder aus mehreren Kunststoffen in einem Mehrkomponentenverfahren gefertigt sein. Ein möglicher Kunststoff ist beispielsweise Polyurethan, wobei selbstverständlich auch andere Werkstoffe, wie beispielsweise PE, insbesondere HDPE, verwendet werden können.

In einer Ausgestaltung ist der Kunststoffkörper ein länglicher Körper, dessen Längsachse im Wesentlichen quer zur Richtung, in der sich der wenigstens eine von ihm umspritzte Kettenstrang erstreckt, und/oder im Wesentlichen quer zur Umfangsrichtung liegt. So kann der Kunststoffkörper beispielsweise leistenförmig ausgestaltet sein, wobei seine Länge in axialer Richtung das wenigstens Dreifache seiner Breite in Umfangsrichtung beträgt. Die Höhe in radialer Richtung ist bevorzugt höchstens, weiter bevorzugt kleiner, als die Höhe der Kettenstränge, die im auf dem Fahrzeugrad montierten Zustand auf der Lauffläche aufliegen.

Ein im Mehrkomponentenverfahren hergestellter Kunststoffkörper erlaubt es, lokale Materialeigenschaften an die jeweils lokal erforderliche Funktion anzupassen. So kann an einer Stelle des Kunststoffkörpers die Festigkeit und/oder Härte gegenüber benachbarten Bereichen aufgrund der Verwendung eines anderen Materials erhöht sein, um beispielsweise an dieser Stelle eine erhöhte Verschleißfestigkeit zu erhalten. Dies kann dann sinnvoll sein, wenn der Kunststoffkörper traktionserhöhende Elemente aufweist, wie von der Lauffläche weg vorragende Vorsprünge und/oder Rippen. An einer anderen Stelle des Kunststoffkörpers kann durch Verwendung eines lokal unterschiedlichen Materials die Elastizität erhöht sein. So kann beispielsweise der Kunststoffkörper eine lokal erhöhte Biegsamkeit bzw. Flexibilität aufweisen, um sich besser an das Verformungsverhalten des Reifens während des Abrollens anzupassen.

Wenigstens eines der mehreren Laufnetzelemente kann zusätzlich zum wenigstens einen umspritzen Kettenstrang wenigstens ein im Kunststoffkörper zumindest teilweise eingebettetes Element aufweisen, dessen Festigkeit und/oder Härte größer ist als die des Kunststoffkörpers. Ein solches eingebettetes, umspritztes Element kann als Versteifung des Kunststoffkörpers verwendet werden, um die Dauerfestigkeit zu verbessern. In einer Variante kann das wenigstens eine eingebettete bzw. umspritzte Element im auf dem Fahrzeugrad montierten Zustand wenigstens auf der von der Lauffläche abgewandten Seite vom Kunststoffkörper vorstehen und, in einer weiteren Ausgestaltung, den Kunststoffkörper überragen. In diesem Fall kann das eingebettete Element als Traktionshilfe oder als Verschleißschutz dienen. Von Vorteil ist dabei, wenn das wenigstens eingebettete Element aus einem Metallwerkstoff, beispielsweise aus einem Stück Metallblech, gefertigt ist. Die Ebene des eingebetteten Elements kann senkrecht zur Lauffläche ausgerichtet sein, wenn das Laufnetz auf dem Fahrzeugrad montiert ist. Eine aus dem Kunststoffkörper ragende oder diesen überragende Kante des eingebetteten Elements kann gerade, aber auch gezackt und/oder gewellt, sein, um sich beispielsweise besser in Eis und Harsch eingraben zu können.

Alternativ oder kumulativ kann wenigstens ein eingebettetes Element als ein Befestigungselement zur Anbringung einer Halterung der Gleitschutzvorrichtung ausgestaltet sein. Beispielsweise kann in das Befestigungselement die Halterung einhängbar sein. Das Befestigungselement kann eine Öse, einen Haken, einen Clip, einen Schenkel und/oder einen Karabiner aufweisen.

Gemäß einer weiteren Ausgestaltung kann wenigstens eines der mehreren Laufnetzelemente einen Kunststoffkörper mit einer Sollbruchstelle aufweisen. Die Sollbruchstelle kann dabei ein mechanisch geschwächter Bereich sein, dessen Festigkeit gegenüber angrenzenden Bereichen herabgesetzt ist. Eine solche Herabsetzung der mechanischen Festigkeit kann beispielsweise durch eine Querschnittverringerung und/oder durch ein Material mit geringerer Festigkeit im Bereich der Sollbruchstelle erreicht werden.

Die Sollbruchstelle kann sich zwischen zwei vom Kunststoffkörper umspritzten Kettensträngen befinden. Ein solches Laufnetzelement kann beispielsweise als Verkürzungselement dienen, wenn die vom Kunststoffkörper mit der Sollbruchstelle umspritzten Kettenstränge zumindest außerhalb des umspritzten Bereichs wenigstens auf einer der beiden in Umfangsrichtung gelegenen Seiten des Kunststoffkörpers beispielsweise X- oder V-förmig auf den Kunststoffkörper zulaufen. Wird der Kunststoffkörper an der Sollbruchstelle durchtrennt, so lässt sich das Laufnetz weiten und an einen größeren Durchmesser des Fahrzeugrades anpassen. Ansonsten kann eine Sollbruchstelle auch genutzt werden, um bei lokal auftretender Überlastung des Laufnetzes eine Beschädigung der gesamten Gleitschutzvorrichtung oder des Fahrzeugrades zu vermeiden.

Der Kunststoffkörper wenigstens eines der mehreren Laufnetzelemente kann im auf dem Fahrzeugrad montierten Zustand über wenigstens eine Reifenschulter des Fahrzeugrades beispielsweise bis hin zur Reifenflanke oder zur Radfelge reichen. Bei einer solchen Ausgestaltung kann der Kunststoffkörper zur mittelbaren oder unmittelbaren Befestigung des Laufnetzes am Fahrzeugrad verwendet werden. So kann der Kunststoffkörper wenigstens einen um die Reifenschulter herumreichenden Arm ausbilden, an dem, insbesondere an dessen Ende, ein als Befestigungselement eingebettetes, also umspritztes Element vorhanden ist. Der Arm kann bis zur Reifenschulter oder bis zur Felge reichen.

Ein solches Befestigungselement erlaubt es, die Halterung der Gleitschutzvorrichtung am Kunststoffkörper anzubringen. Die Halterung kann dabei Speichen aufweisen, die in Richtung der Radnabe nach radial innen verlaufen und am Befestigungselement angebracht sind. Alternativ oder kumulativ kann die Halterung einen Seitenstrang aufweisen, der sich in Umfangsrichtung insbesondere durchgängig entlang der Reifenflanke oder der Felge erstreckt.

Das Laufnetz kann wenigstens ein Laufnetzelement aufweisen, das nur einen Arm aufweist, der sich entweder über die innenseitige Reifenschulter oder die außenseitige Reifenschulter erstreckt. In einem solchen Fall ist es von Vorteil, wenn sich in Umfangsrichtung insbesondere gleichmäßig beabstandet voneinander Laufnetzelemente mit zur Innenseite reichendem Arm und Laufnetzelemente mit zur Außenseite reichendem Arm abwechseln, wobei zwischen solchen Laufnetzelementen weitere Laufnetzelemente ohne Arme vorgesehen sein können. Alternativ oder kumulativ kann auch wenigstens ein Laufnetzelement vorgesehen sein, das sowohl einen zur Innenseite als auch einen zur Außenseite reichenden Arm aufweist. Auch hier ist es vorteilhaft, wenn mehrere solche Laufnetzelemente insbesondere gleichmäßig beabstandet voneinander in Umfangsrichtung im Laufnetz vorgesehen sind, wobei zwischen den derartigen Laufnetzelementen weitere, unterschiedlich ausgestaltete Laufnetzelemente mit Kunststoffkörpern, wie oben beschrieben, angeordnet sein können.

In einem Laufnetz können die unterschiedlichsten Arten von Laufnetzelementen vorhanden sein, in denen jeweils unterschiedliche der oben beschriebenen Merkmale vorhanden sind. So kann beispielsweise ein Laufnetzelement sowohl einen oder mehrere Arme als auch ein eingebettetes Element aufweisen. Ein Kunststoffkörper mit Sollbruchstelle kann ebenfalls ein eingebettetes Element aufweisen oder ohne ein solches Element ausgestaltet sein. Das Laufnetz kann aus mehreren in Umfangsrichtung aneinander gestückelten, identisch ausgestalteten Laufnetzsegmenten zusammengestückelt sein. In einem Laufnetzsegment können unterschiedlich ausgestaltete Laufnetzelemente vorhanden sein. Durch das Umspritzen lässt sich ein solches Laufnetzsegment in einem Arbeitsgang fertigen, in dem alle Kunststoffkörper des Laufnetzsegments gleichzeitig gefertigt werden.

Sind mehrere unterschiedliche Laufnetzelement mit unterschiedlich geformten Kunststoffkörpern bekannt, so können die unterschiedlichen Kunststoffkörper jeweils einen identisch ausgeformten Abschnitt aufweisen. Für diesen bei den unterschiedlichen Kunststoffkörpern identischen Abschnitt kann bei Umspritzen dieselbe (Grund-)Form verwendet werden. Die untereinander unterschiedlichen Abschnitte können dann auf einfache Weise durch Formen hergestellt werden, die die Grundform ergänzen. Beispielsweise kann eine solche Grundform durch eine Form ergänzt sein, durch die beim Umspritzen ein oben beschriebener Arm angeformt wird. Ohne diese ergänzende Form wird dann bei diesem Beispiel ein Kunststoffkörper ohne Arm geformt.

Das Laufnetz und die Gleitschutzvorrichtung mit dem Laufnetz sind insbesondere für den Einsatz bei Personenkraftwagen ausgestaltet.

Im Folgenden ist ein Ausführungsbeispiel mit Bezug auf die Zeichnungen beschrieben. In dem Ausführungsbeispiel ist eine Kombination der oben dargelegten Merkmale lediglich beispielhaft wiedergegeben. Ein oben beschriebenes, bei dem Ausführungsbeispiel nicht vorhandenes Merkmal kann hinzugefügt werden, sollte es bei einer bestimmten Anwendung auf den mit diesem Merkmal verknüpften technischen Effekt ankommen. Umgekehrt kann auch ein beim Ausführungsbeispiel vorhandenes Merkmal nach Maßgabe der obigen Beschreibung weggelassen werden, wenn es auf den mit diesem Merkmal verknüpften technischen Effekt bei einer bestimmten Anwendung nicht ankommen sollte.

Im Folgenden sind für Elemente, die einander hinsichtlich Struktur und/oder Funktion entsprechen, dieselben Bezugszeichen verwendet.

Es zeigen:
- Fig. 1: eine schematische Perspektivdarstellung eines Fahrzeugrades mit einer Gleitschutzvorrichtung mit Blickrichtung von außen;
- Fig. 2: eine schematische Perspektivdarstellung des Fahrzeugrades und der Gleitschutzvorrichtung der Fig. 1 mit Blickrichtung von innen;
- Fig. 3: eine schematische Perspektivdarstellung eines Laufnetzes der Gleitschutzvorrichtung der Fig. 1 und 2;
- Fig. 4: eine schematische Darstellung des abgewickelten Laufnetzes der Fig. 3;
- Fig. 5: eine schematische Darstellung eines Details der Fig. 4;
- Fig. 6: eine schematische Perspektivdarstellung eines Laufnetzelements des Laufnetzes der Fig. 5
- Fig. 7: eine schematische Seitenansicht einer weiteren Gleitschutzvorrichtung mit Blickrichtung von außen;
- Fig. 8: eine schematische Ansicht der Gleitschutzvorrichtung der Fig. 7 mit Blick in radialer Richtung.

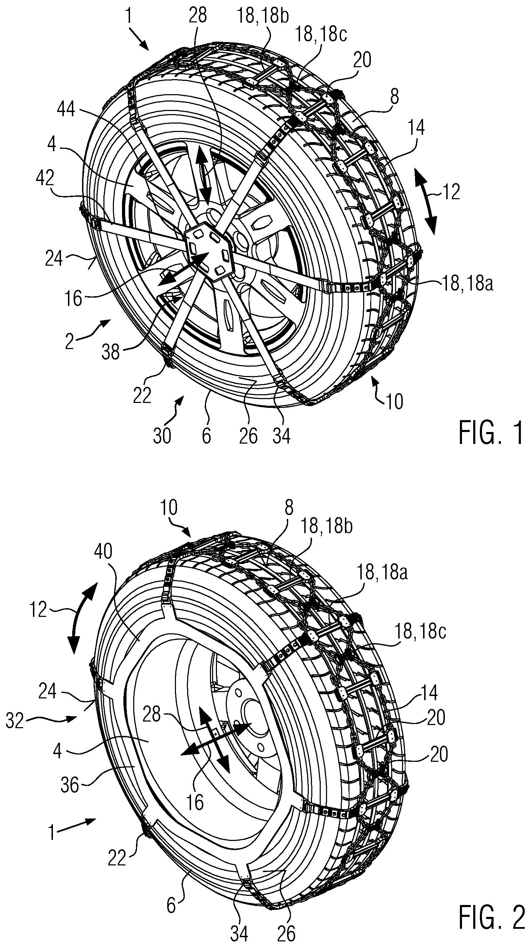

In den Fig. 1 und 2 ist eine auf einem Fahrzeugrad 1 montierte Gleitschutzvorrichtung 2 schematisch dargestellt. Das Fahrzeugrad 1 weist einen auf einer Felge 4 angebrachten Reifen 6 auf, der auf seiner Lauffläche 8 abrollt.

Auf der Lauffläche 8 liegt ein Laufnetz 10 der Gleitschutzvorrichtung 2 auf, das sich entlang einer Umfangsrichtung 12 des Reifens 6 erstreckt, wenn die Gleitschutzvorrichtung 2 auf dem Fahrzeugrad 1 montiert ist. Das Laufnetz 10 dient dazu, die Traktion des Reifens 6 auf rutschigem Untergrund, wie beispielsweise auf Schlamm, Eis oder Schnee, zu erhöhen.

Das Laufnetz 10 weist einen oder mehrere Kettenstränge 14 auf, die zumindest abschnittsweise auf der Lauffläche 10 liegen. Der wenigstens eine Kettenstrang 14 kann sich ferner zumindest abschnittsweise in Umfangsrichtung 12 erstrecken. Dabei muss er jedoch nicht notwendigerweise parallel zur Umfangsrichtung 12 verlaufen. So erhöht beispielsweise ein parallel zur Umfangsrichtung 12 verlaufender Kettenstrang zwar die Spurtreue, ein geneigt oder quer zur Umfangsrichtung 12 verlaufender Kettenstrang 14 erhöht jedoch die Traktion. Somit ergibt sich die Richtung, in der sich ein Kettenstrang 14 erstreckt, aus dem angestrebten Kompromiss zwischen Spurtreue und Traktionserhöhung.

Anstelle wenigstens eines in Umfangsrichtung durchgehenden Kettenstranges 14 können auch mehrere in Umfangsrichtung hintereinander angeordnete Kettenstränge 14 vorhanden sein.

Unabhängig davon, ob und wie viele Kettenstränge 14 in Umfangsrichtung 12 hintereinander angeordnet sind, können auch in einer axialen Richtung 16 wenigstens zwei Kettenstränge 14 zumindest abschnittsweise nebeneinander angeordnet sein oder sogar parallel zu einander verlaufen.

Ein Kettenstrang 14 kann beispielsweise aus einem Panzer-, Rundstahl- oder Profilkettenstrang gebildet sein. Im Laufnetz 10 können Kettenstränge mit Gurten und/oder Seilen kombiniert sein.

Das Laufnetz 10 weist ferner Laufnetzelemente 18 auf. Dabei können unterschiedlich ausgestaltete Laufnetzelemente 18, die unterschiedliche Funktionen aufweisen, vorhanden sein. Unabhängig von ihrer Ausgestaltung und ihrer Funktion weisen die Laufnetzelemente 18 einen Kunststoffkörper 20 auf, der um wenigstens einen Kettenstrang 14 gespritzt ist. Der Kunststoffkörper kann aus einem Kunststoff oder aber auch in einem Mehrkomponentenverfahren aus mehreren unterschiedlichen Kunststoffen gefertigt sein. Als Kunststoff kommt ein Plastikwerkstoff, beispielsweise Polyurethan oder PE, wie HDPE, oder ein Gummi- oder gummielastisches Material zur Anwendung. Der Kunststoffkörper 20 kann um alle oben genannten Arten von Kettensträngen 14 gespritzt sein.

Einzelne Laufnetzelemente 18, in Fig. 1 als 18a bezeichnet, können beispielsweise zur Befestigung des Laufnetzes 10 am Fahrzeuggrad 1 dienen. Andere Laufnetzelemente 18b können ausschließlich der Traktionserhöhung dienen, während wiederum andere Laufnetzelemente 18c als Verkürzungselemente dienen, durch deren Entfernung sich das Laufnetz 10 weiten und an größere Reifendurchmesser anpassen lässt. Ein Laufnetzelement 18 kann auch mehrere unterschiedliche Funktionen erfüllen. Beispielsweise kann ein Laufnetzelement 18a oder ein Laufnetzelement 18c zusätzlich eine traktionserhöhende Funktion aufweisen.

Die zur Befestigung des Laufnetzes 10 an dem Fahrzeuggrad 1 dienenden Laufnetzelemente 18a können einen oder zwei Arme 22 aufweisen, die sich in axialer Richtung 16 über die Lauffläche 8 und eine Reifenschulter 24 erstrecken können. Entlang der Reifenflanke 26 erstrecken sich die Arme 22 dann in einer radialen Richtung 28.

Im dargestellten Ausführungsbeispiel ist ein Laufnetzelement 18a lediglich zu Anschauungszwecken mit zwei sich bezüglich der Lauffläche 8 gegenüberliegenden Armen 22 versehen, von denen sich ein Arm 22 um die Reifenschulter 24 an der Außenseite 30 des Reifens 6 und der andere Arm 22 um die Reifenflanke 26 an der Innenseite 32 des Fahrzeugrades 1 erstreckt. Alternativ oder kumulativ kann ein Fahrzeugelement 18a auch nur mit einem einzigen Arm 22 versehen sein, der sich dann entweder um die Reifenflanke 24 an der Außenseite 30 oder um die Reifenflanke 26 an der Innenseite 32 bis zur Reifenflanke 26 oder bis zur Felge 4 erstreckt. Bei einer solchen Ausgestaltung können in Umfangsrichtung 12 abwechselnd Laufnetzelemente 18a mit zur Innenseite 32 und Laufnetzelemente 18a mit zur Außenseite 30 hinreichenden Armen 22 versehen sein.

An den Armen 22 können, insbesondere im Bereich der Reifenschulter 24, Reifenflanke 26 und/oder der Felge 4, Befestigungselemente 34 angebracht sein. Ein solches Befestigungselement 34 kann zur Anbringung einer Innenhalterung 36 oder Außenhalterung 38 dienen. Die Innenhalterung 36 befindet sich an der Innenseite 32 und weist beispielsweise einen sich in Umfangsrichtung 12 erstreckenden Seitenstrang 40 in Form beispielsweise einer Kette, eines Gurtes, eines Seils oder eines Bügels auf. Dank der Umspritzung kann die Fertigung rasch zwischen unterschiedlichen Arten von Kettensträngen 14 umgeschaltet werden.

Ein Befestigungselement 34 kann dabei in den Kunststoffkörper 20 eingebettet, also von ihm umspritzt sein.

Die Außenhalterung 38 befindet sich an der Außenseite des Fahrzeugrades und kann, in einer Ausgestaltung, wie die Innenhalterung 36 einen Seitenstrang 40 aufweisen. In der beispielhaft dargestellten Ausführungsform weist die Außenhalterung 38 sich in radialer Richtung 28 erstreckende Speichenarme 42 auf, die hier in radialer Richtung 28 auf ein Nabenteil 44 zulaufen und von diesem zusammengehalten sind. Anstelle eines Nabenteils 44 kann ein ringförmiger Seitenstrang vorgesehen sein. Die Speichenarme 42 können biegeschlaff, beispielsweise in Form von Gurten, Seilen oder Ketten ausgestaltet oder von vorzugsweise elastischen Festkörpern, beispielsweise in axialer Richtung 16 federelastisch flexiblen speichenförmigen Bügeln, gebildet sein. Im Falle von elastischen Festkörpern als Speichenarme 42 kann auf eine Innenhalterung 36 verzichtet werden, wenn die Gleitschutzvorrichtung 2 Mittel aufweist, um die Arme 22 gegenüber dem Fahrzeugrad 1 zu spannen.

Die Befestigungselemente 34 sind bevorzugt so ausgestaltet, dass die Innenhalterung 36 und/oder die Außenhalterung 38 eingehängt werden kann. Beispielsweise können die Befestigungselemente 34 in Form von Haken, Ösen, Schäkeln oder Karabinern ausgestaltet sein.

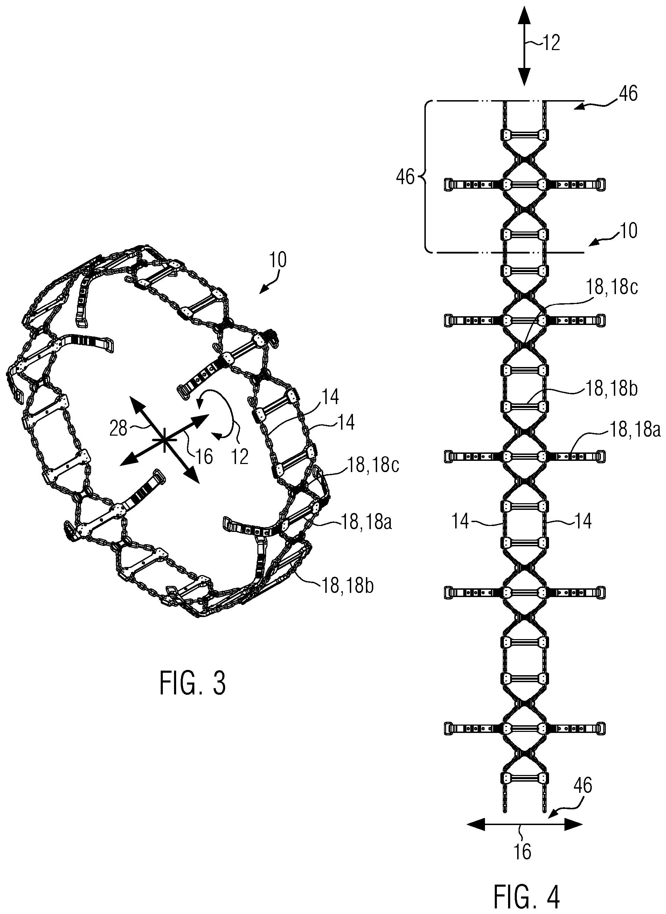

Das Laufnetz 10, das in Fig. 3 ohne Fahrzeugrad 1 im montierten Zustand dargestellt ist, ist bevorzugt bezüglich einer senkrecht zur axialen Richtung 16 verlaufenden Ebene symmetrisch ausgestaltet, so dass bei der Fertigung des Laufnetzes nicht auf dessen Orientierung geachtet werden muss. Zu erkennen ist ferner, dass bei dem dargestellten Ausführungsbeispiel jedes Laufnetzelement 18 zwei in Umfangsrichtung 12 verlaufende Kettenstränge 14 in axialer Richtung 16 miteinander verbindet, die Laufnetzelemente 18 mithin also auch als Abstandshalter dienen, die die Kettenstränge 14 in einer durch die Umspritzung vorgegebenen Ausrichtung und Position halten.

Selbstverständlich können in einer alternativen Ausgestaltung einzelne Laufnetzelemente 18 auch nur mit einem Kettenstrang 14 verbunden sein und sich beispielsweise vornehmlich in Umfangsrichtung 12 erstrecken.

In Fig. 4 ist das Laufnetz 10 der Fig. 3 abgewickelt dargestellt. Zur Herstellung eines ringförmig geschlossenen Laufnetzes 10 werden beispielsweise die beiden in Umfangsrichtung 12 gelegenen Enden des wenigstens einen Kettenstranges 14 miteinander verbunden.

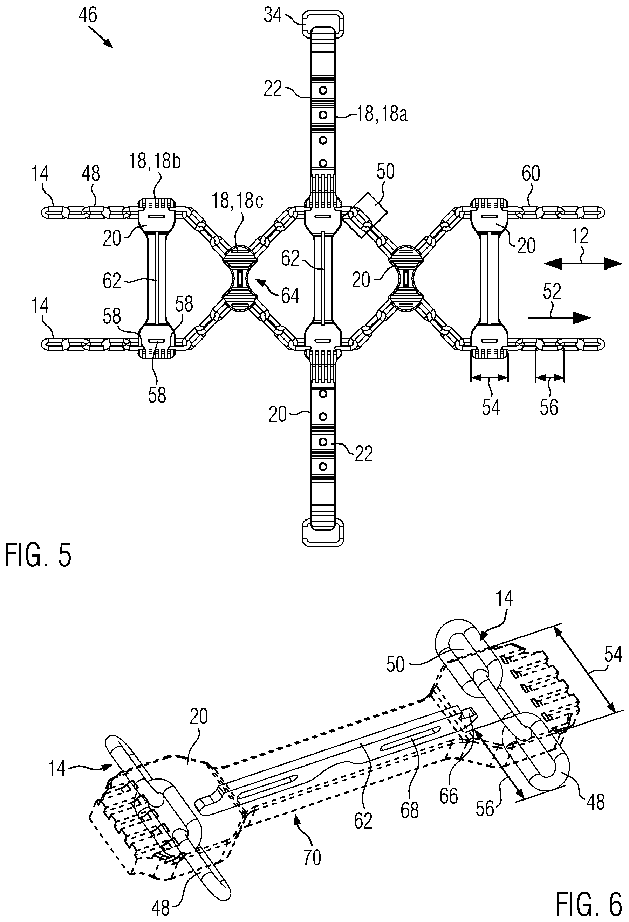

Das Laufnetz 10 kann aus mehreren identischen, in Umfangsrichtung 12 aneinander gereihten Laufnetzsegmenten 46 aufgebaut sein. Fig. 5 zeigt beispielhaft ein solches Laufnetzsegment 46, bei dem, lediglich exemplarisch, ein Kettenstrang 14 aus einer Rundstahl- oder Profilstahlkette mit Kettengliedern 48 hergestellt ist. Wie oben bereits ausgeführt ist, können anstelle einer Rundstahl- oder Profilstahlkette auch Panzerketten verwendet werden. Von einem Kunststoffkörper 20 ist in Richtung einer Längserstreckung 52 eines Kettenstranges 14 wenigstens ein Kettenglied 48 des Kettenstranges 14 umspritzt. Insbesondere können zwischen einem und fünf (aufeinanderfolgende) Kettenglieder 48 eines Kettenstranges 14 im Kunststoffkörper 20 eingebettet bzw. von diesem umspritzt sein.

Die Kettenglieder 48 können im Kunststoffkörper abwechselnd stehend oder liegend angeordnet sein. Darunter ist eine Ausrichtung zu verstehen, bei der die jeweils von den Kettengliedern 48 aufgespannten Ebenen 50 abwechselnd senkrecht auf die Lauffläche 8 (Fig. 1, 2) und parallel dazu ausgerichtet sind. Alternativ können die Kettenglieder 48 im Kunststoffkörper 20 auch abwechselnd schräg auf der Lauffläche 8 des Reifens 6 aufliegen. In diesem Fall liegt die Ebene 50 eines Kettengliedes 48 in einem Winkel zwischen etwa 30° und etwa 60° zur Lauffläche 8 und die Ebene 50 der benachbarten Kettenglieder 48 jeweils im Winkel von etwa -30° bis etwa -60° zur Lauffläche 8. Ein Kettenstrang 14 kann eine beliebige Kombination von Abschnitten mit stehenden und liegenden Kettengliedern 48 und Abschnitten mit schräg liegenden Kettengliedern 48 aufweisen.

Die Ausrichtung der Kettenglieder 48 und die Orientierung der Längserstreckung 52 eines Kettenstranges 14 zwischen zwei Laufnetzelementen 18 wird wesentlich durch die Ausrichtung bzw. Orientierung bestimmt, in der der Kettenstrang 14 vom Kunststoffkörper 20 umspritzt ist.

Die Länge 54 des Bereichs des Kettenstranges 14, der vom Kunststoffkörper umspritzt ist, beträgt wenigstens eine Länge 56 eines Kettengliedes 48, beispielsweise etwa ein bis fünf Längen 56.

Der umspritzte, im Kunststoffkörper 20 eingebettete Abschnitt eines Kettenstrangs 14 muss nicht vollständig umspritzt sein. So kann der Kettenstrang 14 zumindest abschnittsweise auf der im montierten Zustand der Lauffläche 8 zugewandten Seite und/oder auf der von der Lauffläche 8 abgewandten Seite aus dem Kunststoffkörper 20 ragen. Solche vorkragenden, aus der Umspritzung ragenden Abschnitte 58 eines Kettenstranges 14 sind in Fig. 5 beispielhaft dargestellt. Die Anzahl der aus dem Kunststoffkörper 20 ragenden Abschnitte 58 kann variieren. Beispielsweise können Schenkel 60 einzelner oder aller von einem Kunststoffkörper 20 umspritzten Kettenglieder 48 zumindest abschnittsweise laufflächenseitig oder auf der der Laufflächenseite gegenüberliegenden Seite aus dem Kunststoffkörper 20 ragen. Die Abschnitte 58 erhöhen die Traktion und verringern den Verschleiß der Kunststoffkörper, insbesondere wenn wenigstens ein Abschnitt 58 den Kunststoffkörper 20 auf seiner Seite überragt.

In einem Kunststoffkörper 20 kann zusätzlich zu dem wenigstens einen umspritzten Kettenstrang 14 und gegebenenfalls wenigstens einem Befestigungselement 34 ein weiteres umspritztes Element 62, im Folgenden als eingebettetes Element 62 bezeichnet, vorhanden sein.

Das eingebettete Element 62 kann zur Versteifung und/oder Traktionserhöhung dienen. Dient das eingebettete Element 62 der Versteifung, so kann es vollständig im Kunststoffkörper 20 eingebettet sein und beispielsweise nirgends aus dem Kunststoffkörper 20 ragen.

Dient das wenigstens eine eingebettete Element 62 der Traktionserhöhung, so kann es auf der im montierten Zustand von der Lauffläche 8 wegweisenden Seite des Kunststoffkörpers 20 in radialer Richtung 28 nach außen vorspringen. Der vorspringende Abschnitt 58 kann streifen- oder punktförmig ausgebildet sein. Zumindest der aus dem Kunststoffkörper 20 ragende Abschnitt 58 eines solchen eingebetteten Elements 62 kann beispielsweise als eine gerade, gezackte oder abschnittweise gekrümmte, insbesondere wellenförmige Rippe ausgebildet sein, die quer zur Umfangsrichtung 12, wie beim Laufnetzelement 18b, oder entlang der Umfangsrichtung 12, geneigt oder parallel dazu, ausgerichtet ist.

Einzelne Abschnitte des Kunststoffkörpers 20 können, wie bereits erwähnt, aus unterschiedlichen Kunststoffen mit unterschiedlichen Materialeigenschaften, beispielsweise einer unterschiedlichen Härte oder Flexibilität, gefertigt sein. So kann ein Arm 22 einen Abschnitt erhöhter Flexibilität aufweisen, der sich im montierten Zustand des Laufnetzes 10 leichter um die Reifenschulter 24 (Fig. 1, 2) legt.

Die Laufnetzelemente 18a, 18b, 18c können unterschiedlich ausgestaltet sein. Einzelne oder alle Kunststoffkörper 20 der unterschiedlichen Laufnetzelemente 18a, 18b, 18c können länglich sein, wobei die Längserstreckung der Kunststoffkörper 20 beispielsweise quer zur Umfangsrichtung 12 ausgerichtet ist.

Auf das Laufnetzelement 18c können die von ihm umspritzten Kettenstränge 14 entlang der Umfangsrichtung 12 von beiden Seiten her aufeinander zulaufen, so dass sich beispielsweise ein X-förmiger Laufnetzelemente 18c ergibt. Das Laufnetzelement 18c dient als Verkürzungselement, durch das der Durchmesser beziehungsweise der Umfang des Laufnetzes 10 verringert ist.

Das Laufnetzelement 18c kann eine Sollbruchstelle 64 aufweisen, in der seine mechanische Festigkeit beispielsweise durch eine Querschnittsverringerung gegenüber angrenzenden Bereichen herabgesetzt ist. Die Sollbruchstelle 64 sollte in so einem Fall kein eingebettetes Element 62 aufweisen.

An der Sollbruchstelle 64 kann das Laufnetzelement 18c einfach durchtrennt, beispielsweise durchschnitten oder durchbrochen werden, so dass die ansonsten miteinander verbundenen Kettenstränge 14 getrennt werden. Durch das Durchtrennen vergrößert sich der Durchmesser des Laufnetzes in Umfangsrichtung 12, sofern in dieser Radialebene sämtliche Kettenstränge 14 im Verkürzungselement 18c zusammengeführt sind.

Die Kunststoffkörper 20 unterschiedlicher Laufnetzelemente 18 können jeweils abschnittsweise identisch ausgeformte Abschnitte aufweisen. Für die identisch ausgeformten Abschnitte kann beim Umspritzen dieselbe Grundform verwendet werden. Durch Anfügen weiterer Formen an die Grundform kann diese durch weitere Abschnitte ergänzt werden. So ist beispielsweise die Grundform der Laufnetzelemente 18b identisch in den Laufnetzelementen 18a vorhanden und die Arme 22 sind bei den Laufnetzelementen 18a zusätzlich angeformt. Darüber hinaus könnte auch das Laufnetzelement 18c in seiner Grundform identisch in wenigstens einem der anderen Laufnetzelemente 18b, 18c enthalten sein. Falls eine Sollbruchstelle 64 notwendig ist, kann beispielsweise ein eingebettetes Element 62 fehlen.

In Fig. 6 ist dargestellt, dass ein eingebettetes Element 62 wenigstens eine im Kunststoffkörper 20 eingebettete Hinterschneidung 66 aufweisen kann, um seine Verankerung im Kunststoffkörper 20 zu verbessern. Alternativ oder kumulativ zu der wenigstens einen Hinterschneidung 66 können auch ein oder mehrere Durchbrüche 68 in dem im Kunststoffkörper 20 befindlichen Bereich des eingebetteten Elements 62 vorhanden sein, wobei sich das Material des Kunststoffkörpers 20 durch die Durchbrüche 68 erstreckt.

Vom Kunststoffkörper 20 sind jeweils drei Kettenglieder 48 zweier Kettenstränge 14 umspritzt, wobei die Ebenen 50 der umspritzten Kettenglieder 48 abwechselnd schräg zur Lauffläche 8 bzw. der im montierten Zustand auf der Lauffläche 8 aufliegenden Unterseite 70 des Kunststoffkörpers 20 im Kunststoffkörper 20 eingebettet sind. Der Winkel der Ebenen 50 zur Lauffläche 8 beziehungsweise der Unterseite 70 liegt hier, wie oben bereits erwähnt, abwechselnd im Bereich von etwa +30° bis etwa +60° und im Bereich von etwa -30° bis etwa -60°.

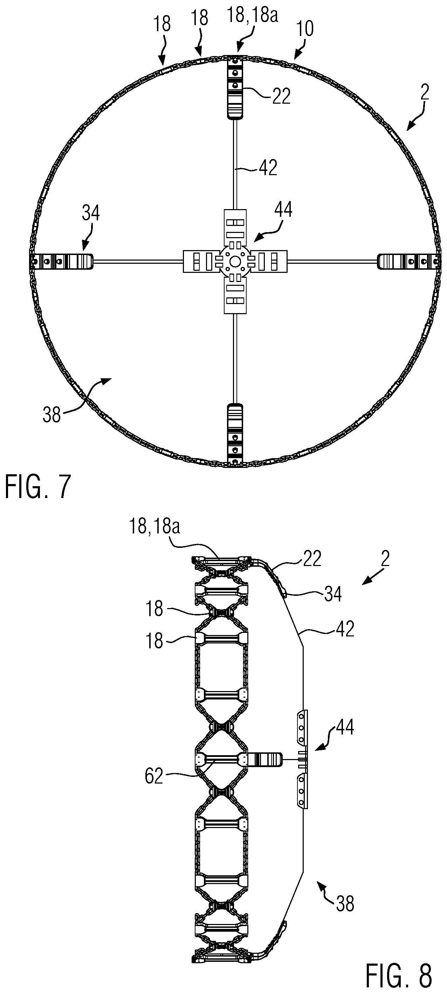

In den Fig. 7 und 8 ist eine Gleitschutzvorrichtung 2 gezeigt, die im Gegensatz zu der Gleitschutzvorrichtung 2 der Fig. 1 und 2 keine Innenhalterung 36 und Außenhalterung 38, sondern nur eine Außenhalterung 38 mit in axialer Richtung 16 elastisch biegbaren Speichenarmen 42 aufweist. Das Nabenteil 44 dieser Außenhalterung 38 wird an der Felge 4 befestigt, so dass die Speichenarme 42 ausgelenkt werden und das Laufnetz 10 selbständig auf die Lauffläche 8 drücken. Das Laufnetz 10 kann etwas anders ausgeformte und insbesondere steifere Arme 22 und anders ausgestaltete Befestigungselemente 34 aufweisen. Durch eine Anpassung des Materials des Kunststoffkörpers 20 des Laufnetzelements 18a und/oder durch eine Änderung der die Arme 22 beim Umspritzen ausbildenden Form kann, bei gleicher Grundform, einfach und kostengünstig von einer Fertigung eines Laufnetzes 10 der Fig. 1 und 2 auf eine Fertigung des modifizierten Laufnetzes 10 der Fig. 7 und 8 umgestellt werden.

### Bezugszeichen

- 1: Fahrzeugrad
- 2: Gleitschutzvorrichtung
- 4: Felge
- 6: Reifen
- 8: Lauffläche
- 10: Laufnetz
- 12: Umfangsrichtung
- 14: Kettenstrang
- 16: axiale Richtung
- 18, 18a, 18b, 18c: Laufnetzelement
- 20: Kunststoffkörper
- 22: Arm
- 24: Reifenschulter
- 26: Reifenflanke
- 28: radiale Richtung
- 30: Außenseite des Fahrzeugrades
- 32: Innenseite des Fahrzeugrades
- 34: Befestigungselement
- 36: Innenhalterung
- 38: Außenhalterung
- 40: Seitenstrang
- 42: Speichenarme
- 44: Nabenteil
- 46: Laufnetzsegment
- 48: Kettenglied
- 50: Ebene eines Kettengliedes
- 52: Längserstreckung eines Kettenstranges
- 54: Länge einer Umspritzung
- 56: Länge eines Kettengliedes
- 58: aus der Umspritzung ragender Abschnitt des Kettenstranges
- 60: Schenkel
- 62: eingebettetes/umspritztes Element
- 64: Sollbruchstelle
- 66: Hinterschneidung
- 68: Durchbruch
- 70: Unterseite des Kunststoffkörpers

## Patentansprüche

1. Laufnetz (10) für eine auf einem Fahrzeugrad (1) zu montierende Gleitschutzvorrichtung (2),
mit Kettensträngen (14), die im auf dem Fahrzeugrad (1) montierten Zustand auf einer Lauffläche (8) des Fahrzeugrades (1) aufliegen, und
mit einem oder mehreren Laufnetzelementen (18), die im auf dem Fahrzeugrad (1) montierten Zustand ebenfalls auf der Lauffläche (8) des Fahrzeugrades (1) aufliegen und einen Kunststoffkörper (20) aufweisen, von dem wenigstens einer der Kettenstränge (14) umspritzt ist.

2. Laufnetz (10) nach Anspruch 1, wobei wenigstens eines der mehreren Laufnetzelemente (18) einen Kunststoffkörper (20) aufweist, von dem wenigstens zwei der Kettenstränge (14) beabstandet voneinander umspritzt sind.

3. Laufnetz (10) nach Anspruch 2, wobei der Kunststoffkörper (20) die wenigstens zwei umspritzten Kettenstränge (14) im auf dem Fahrzeugrad (1) montierten Zustand quer zu einer Umfangsrichtung (12) miteinander verbindet.

4. Laufnetz (10) nach Anspruch 1 oder 2 wobei sich die wenigstens zwei umspritzten Kettenstränge (14) im auf dem Fahrzeugrad (1) montierten Zustand wenigstens abschnittsweise in Umfangsrichtung (12) erstrecken.

5. Laufnetz (10) nach einem der Ansprüche 1 bis 4, wobei das Laufnetz (10) wenigstens zwei durch den wenigstens einen Kettenstrang (14) miteinander verbundene Kunststoffkörper aufweist, die im auf dem Fahrzeugrad (1) montierten Zustand in Umfangsrichtung voneinander beabstandet sind.

6. Laufnetz (10) nach einem der Ansprüche 1 bis 5, wobei im auf dem Fahrzeugrad (1) montierten Zustand der wenigstens eine umspritzte Kettenstrang (14) zumindest abschnittsweise aus dem Kunststoffkörper (20) ragt.

7. Laufnetz (10) nach einem der Ansprüche 1 bis 6, wobei der Kunststoffkörper (20) aus wenigstens einem Plastikwerkstoff, wenigstens einem Gummiwerkstoff und/oder wenigstens einem gummielastischen Werkstoff gefertigt ist.

8. Laufnetz (10) nach einem der Ansprüche 1 bis 9, wobei wenigstens eines der mehreren Laufnetzelemente (18) zusätzlich zum wenigstens einen umspritzten Kettenstrang (14) wenigstens ein im Kunststoffkörper (20) zumindest teilweise eingebettetes Element (62) aufweist, dessen Festigkeit und/oder Härte größer ist als die des Kunststoffkörpers (20).

9. Laufnetz (10) nach Anspruch 8, wobei das wenigstens eine eingebettete Element (62) aus einem Metallwerkstoff gefertigt ist.

10. Laufnetz (10) nach Anspruch 8 oder 9, wobei das wenigstens eine eingebettete Element (62) im auf dem Fahrzeugrad (1) montierten Zustand auf der von der Lauffläche (8) abgewandten Seite aus dem Kunststoffkörper (20) ragt.

11. Laufnetz (10) nach einem der Ansprüche 8 bis 10, wobei das wenigstens eine eingebettete Element (62) als ein Befestigungselement (34) zu Anbringung einer Halterung (36, 38) der Gleitschutzvorrichtung (2) ausgestaltet ist.

12. Laufnetz (10) nach einem der Ansprüche 1 bis 10, wobei wenigstens eines der mehreren Laufnetzelemente (18) einen Kunststoffkörper (20) mit einer Sollbruchstelle (64) aufweist.

13. Laufnetz (10) nach einem der Ansprüche 1 bis 12, wobei der Kunststoffkörper (20) im auf dem Fahrzeugrad (1) montierten Zustand über wenigstens eine Reifenschulter (24) des Fahrzeugrades (1) reicht.

14. Gleitschutzvorrichtung (2) mit einem Laufnetz (10) nach einem der Ansprüche 1 bis 13.

15. Gleitschutzvorrichtung (2) nach Anspruch 14, wobei die Gleitschutzvorrichtung (2) eine im auf dem Fahrzeugrad (1) montierten Zustand sich auf einer Außenseite (30) des Fahrzeugrades (1) befindliche Außenhalterung (38) und/oder eine im auf dem Fahrzeugrad (1) montierten Zustand sich auf einer Innenseite (32) des Fahrzeugrades (1) befindliche Innenhalterung (36) aufweist, wobei die Innenhalterung (36) und/oder die Außenhalterung (38) an einem Kunststoffkörper (20) wenigstens einer der mehreren Laufnetzelemente (18) befestigt ist.

16. Laufnetzelement (18) für ein Laufnetz (10) gemäß einem der Ansprüche 1 bis 13 oder eine Gleitschutzvorrichtung (2) nach Anspruch 14 oder 15, mit einem Kunststoffkörper (20) und mit einem Kettenstrang (14), der vom Kunststoffkörper (20) umspritzt ist.
